# EUROPEAN PATENT APPLICATION

(11) **EP 3 103 974 A1**
(43) Date of publication of application: **14.12.2016**
(21) Application number: 15171136.3
(22) Date of filing: 09.06.2015
(51) Int. Cl.: F01D 25/34

(54) **A TURBINE TURNING GEAR SYSTEM**

(71) Applicant: General Electric Technology GmbH, 5400 Baden (CH)
(72) Inventor: Böhler, René Josef, 79837 Häusern (DE)
(74) Representative: General Electric Technology GmbH

(57) **Abstract**

The invention relates to turning gear system for a turbine (10). The system comprises a pinion (22) configured and arranged to engage a turning gear (20) so as to turn a shaft (16) of the turbine (10) and further includes a higher pressure oil system (30) having a hydraulic motor (32) and a lower pressure oil system (40) having a hydraulic pump (42) coupled to the hydraulic motor (32) so as to enable a generation of a flow rate using the high pressure oil system as a motive force. A pressure control system (50) for controlling a pressure of the flow rate to enable engagement of the pinion during reverse turning operation is provided.

## Description

### TECHNICAL FIELD

The present disclosure relates generally to single shaft gas turbine/ steam turbine power plants and more specifically to means and methods of employing reverse turbine gear operation of the steam turbine in both new builds and retrofit solutions.

### BACKGROUND INFORMATION

A single shaft power plant typically comprises a gas turbine, generator and steam turbine coupled on one common shaft. Typically, a synchro-self-shifting clutch is used to connect the steam turbine portion of the single shaft to the gas turbine portion of the single shaft. This type of clutch is typically configured to have teeth that automatically engage the instant the input rotational speed overtakes the output rotational speed and further disengage when the input rotation speed slows down relative to the output rotation speed. This has the effect of disengaging the clutch when the steam turbine portion of the clutch is rotating slower than the gas turbine portion of the shaft.

An existing problem is that the gas turbine and steam turbine typically have different limit temperatures at which they must be cooled down to ensure safer working conditions. For examples, for a gas turbine it may be <50°C while for a steam turbine it may be <150°C. Despite the lower temperature requirement of the gas turbine, cooling of the gas turbine maybe achieve significantly faster than the steam turbine as cooling air may be directed through typical cooling channels that are typically configured in the gas turbine. In contrast, as steam turbines typically do not have such cooling channels the steam turbine must typically be cooled down through natural cooling. The result is that cooling times for the steam turbine can be up to two and half days longer than that of a gas turbine.

During the cooling phase, to avoid thermal deformation of the shaft, it is typically to employ a turning gear to turn the shaft. When turned in the operational direction the synchro-self-shifting clutch will typically engage resulting in turning of both the steam turbine and gas turbine portions of the shaft. In such a mode it is typically not safe to perform maintenance work on the gas turbine, even if the gas turbine has cooled to a safe operating temperature.

To enable early maintenance work on the gas turbine a reverse turning gear arrangement may be used to turn the steam turbine after the cold temperature of the gas turbine is reached. Turning the steam turbine portion of the shaft in the opposition direction to the operational direction of the shaft ensures that the synchro-self-shifting clutch remains disengage throughout the operation.

A known power plant operation involves a rundown mod in which the steam turbine decelerates from a nominal speed to a turning gear speed. At his speed a turning gear can be engaged to turn the shaft of the turbine power plant in the direction of normal operation. Prior to reverse turning gear operation, the turbine power plant undergoes a further rundown in which the turbine power plant is run down to standstill. At this point in time the steam turbine reverse turning gear may be engaged, resulting in the acceleration of the steam turbine portion of the power plant shaft, in a direction opposition the operational direction of the shaft, up to the reverse turning gear speed.

The process is reversed during the restart of the turbine power plant. That is, the steam turbine shaft is first decelerated by disengaging the reverse turning gear. Once the shaft rotational speed is zero, the turbine gear is reaccelerated in the operation direction to a turning gear speed using the turning gear before being further accelerated to nominal speed as part of a power plant start-up procedure.

In an arrangement the turning gear consists of an electrical motor with a frequency converter driving a gear pinion wherein at turning gear pinion hydraulically engages with the steam turbine by means of a helical gear on the drive side of the rotor. In order to avoid blocking of the turning gear during startup of the steam turbine the pinion is typically designed such that it drive in the reverse detection the turning gear pinion will be disengaged through mechanical torque. An example of such a system is described in US Patent No 4960006. In order to prevent this disengagement during reverse turning, active torque needs to be applied to the pinion to ensure it remains engaged and further to overcome the torque of the helical gear.

As jacking oil systems used on turbines typically are designed with insufficient hydraulic flow capacity to provide the required active torque required to maintain engagement of the pinion during reverse operation. Similarly lubrication oil systems meet neither the capacity nor pressure needs. As a result alternative means are typically required. Such alternate hydraulic means may include the use of a gear pump connected to an oil lubrication storage system typically forming part of combined cycle power plants. This pump may be driven either from a stand-alone electric motor or else a modified jacking oil pump motor comprising a through shaft that enables tandem operation of the jacking oil pump. Both these solution require additional electrical hardware.

### SUMMARY

A reverse turning gear arrangement is disclosed that can provide an alternative means to generate and provide active torque to maintain engagement of a pinion during reserve turning of a turbine shaft.

It attempts to address this problem by means of the subject matter of the independent claim. Advantageous embodiments are given in the dependent claims.

One general aspect includes a turning gear system, for a turbine, comprising a pinion, a higher pressure oil system, a lower pressure oil system and a pressure control system. The pinion is configured and arranged to engage a turning gear so as to turn a shaft of the turbine. The higher pressure oil system has a hydraulic motor, while the lower pressure oil system has a hydraulic pump coupled to the hydraulic motor to enable a generation of a flow rate using the high pressure oil system as a motive force. The pressure control system is adapted to generate a pressure from the flow rate of oil to enable engagement of the pinion during reverse turning operation.

Further aspects may include one or more of the following features. The pinion configured to self-engage during turning of the shaft in an operational direction. The pressure generated by the pressure control system is 30 bar and 15 bar. The higher pressure oil system is a jacking oil system for the turbine. The lower pressure system is part of a lubrication oil system for the turbine. The turning gear system may also include the turning gear system configured for use with a steam turbine wherein the steam turbine may be a steam turbine of a single shaft combined cycle power plant.

It is a further object of the invention to overcome or at least ameliorate the disadvantages and shortcomings of the prior art or provide a useful alternative.

Other aspects and advantages of the present disclosure will become apparent from the following description, taken in connection with the accompanying drawings which by way of example illustrate exemplary embodiments of the present invention.

### BRIEF DESCRIPTION OF THE DRAWINGS

By way of example, an embodiment of the present disclosure is described more fully hereinafter with reference to the accompanying drawings, in which:
Figure 1 is a schematic of a single shaft combined cycle power plant having a turning gear of an embodiment of the invention; and
Figure 2 is a schematic of portion of a turning gear system for applying hydraulic pressure to engage the turbine gear of Fig. 1 during reverse operation.

### DETAILED DESCRIPTION

Exemplary embodiments of the present disclosure are now described with references to the drawings, wherein like reference numerals are used to refer to like elements throughout. In the following description, for purposes of explanation, numerous specific details are set forth to provide a thorough understanding of the disclosure. However, the present disclosure may be practiced without these specific details, and is not limited to the exemplary embodiment disclosed herein.

Throughout this specification a jacking oil system is defined as a system that is configured and designed to prevent metal to metal contact between journal and bearing shell during start up, by providing high pressure oil in oil pockets machined into the bottom shell of the journal bearing. The system thus configured lifts the shaft system slightly so that it floats on an oil film. The jacking oil system differentiates itself from lower pressure lubrication oil supply by the pressure and flow rate of the oil. That is, lubricating oil supply has insufficient pressure to stop metal to metal contact between journals and bearing shells when the system is stationary.

Reference is made to reverse turning and reverse direction. In this specification this is taken to mean a turning and/or direction opposite to that which occurs during normal operation, wherein, in the case of a power plant, normal operation is the period when power generation occurs.

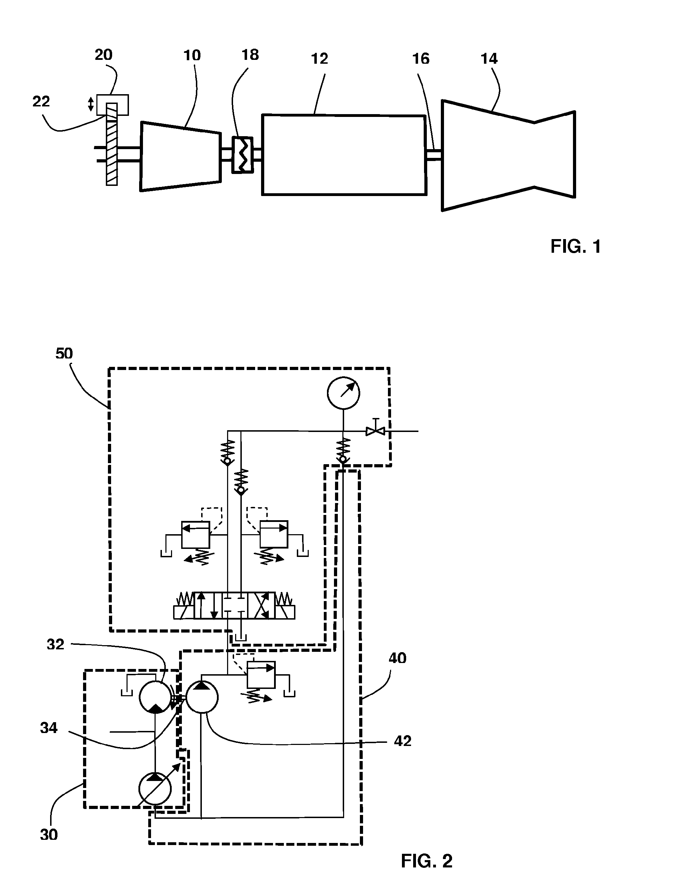

Fig. 1 shows a single shaft combined cycle power plant to which exemplary embodiments may be applied. The combined cycle power plant includes a gas turbine 14 and a generator 12 at one end of a shaft 16 while a steam turbine 10 is located on the same shaft 16 as the gas turbine 14 and the generator 12 but separated from these units by a clutch 18, such as a synchro-self-shifting clutch 18 The power plant further includes a turning gear 20 that is engageable to the shaft 16 via a pinion 22. The turning gear 20 is engageable via hydraulic pressure.

Fig. 2 shows an exemplary embodiment of a part of a turning gear system configured to provide hydraulic pressure to engage the pinion 22 with the shaft 16. The system includes a higher pressure oil system 30, which in an exemplary embodiment is part of a jacking oil system further comprising a hydraulic motor 32 powered by the higher pressure oil system 30.

A lower pressure system 40, which in an exemplary embodiment forms part of a lubrication oil system, includes a hydraulic pump 42. A coupling 34 connects the hydraulic motor 32 to the hydraulic pump 42. Through the arrangement of the hydraulic pump 42, hydraulic motor 32 and coupling 34, low flow rate high pressure hydraulic fluid in the higher pressure system is converted to a flow rate of hydraulic fluid in the lower pressure oil system 40.

From the hydraulic pump 42, hydraulic fluid passes into a pressure control system 50 that controls pressure to engage the turning gear 20.

In an exemplary embodiment, the pressure control system 50 is configured to generate two different hydraulic pressures. A higher pressure, for example 30 bar, suitable for breaking a standstill shaft when first operating the reverse turning, and a lower pressure, for example 15 bar, for maintaining engagement of the pinion during reverse turning operation.

Although the disclosure has been herein shown and described in what is conceived to be the most practical exemplary embodiment the present disclosure can be embodied in other specific. For example, although the turning gear system has be described in relation to a single shaft combined cycle power plant, the turning gear system may be applied to any turbine shaft in which reverse turning operation is required. The presently disclosed embodiments are therefore considered in all respects to be illustrative and not restricted. The scope of the disclosure is indicated by the appended claims rather that the foregoing description and all changes that come within the meaning and range and equivalences thereof are intended to be embraced therein.

### REFERENCE NUMBERS

- 10: steam turbine
- 12: generator
- 14: gas turbine
- 16: shaft
- 18: SSS clutch
- 20: turning gear
- 22: pinion (turning gear)
- 30: jacking oil system
- 32: hydraulic motor
- 34: coupling
- 40: lower pressure oil system
- 42: hydraulic pump
- 50: pressure control system

## Claims

1. A turning gear system, for a turbine (10), comprising:
a pinion (22) configured and arranged to engage a turning gear (20) so as to turn a shaft (16) of the turbine (10);
a higher pressure oil system (30), having a hydraulic motor (32);
a lower pressure oil system (40) having a hydraulic pump (42) coupled to the hydraulic motor (32) so as to enable a generation of a flow rate using the high pressure oil system as a motive force; and
a pressure control system (50) for controlling a pressure of the flow rate to enable engagement of the pinion during reverse turning operation.

2. The turning gear system of claim 1 wherein the pinion (22) is configured to self-engage during turning of the shaft (16) in an operational direction.

3. The turning gear system of claim 1 configured for use with a steam turbine (10).

4. The turning gear system of claim 1 wherein the higher pressure oil system (32) is a jacking oil system (32) for the turbine (10).

5. The turning gear system of claim 1 wherein the lower pressure system (40) is part of a lubrication oil system (40) for the turbine (10).

6. The turning gear system of any one of claims 1 to 5 configured for a steam turbine (10) of a single shaft combined cycle power plant.
